# EUROPEAN PATENT APPLICATION

(11) **EP 2 174 541 A1**
(43) Date of publication of application: **14.04.2010**
(21) Application number: 08017588.8
(22) Date of filing: 07.10.2008
(51) Int. Cl.: A01K 23/00

(54) **Dog excrement collector**

(71) Applicant: Hayes, Michael P.J., 1081 JT Amsterdam (NL)
(72) Inventor: Hayes, Michael P.J., 1081 JT Amsterdam (NL)

(57) **Abstract**

Problem:

All current methods of dog faeces removal are incomplete inasmuch as there are always traces of faeces left on the fouled surface.

Solution:

The Dog Net W.C. ensures that the faeces does not come in contact with the surface involved as well as supplying a sealed bio-degradable container to for disposing the faeces in.

## Description

### Technical Field

This apparatus belongs to the group Animal Husbandry.

### Disclosure of invention

The Dog Net W.C. is a telescopic rod, 40 cm collapsed, 103 cm extended. At the handle end a wrist strap is attached to ease the carrying. A ring is attached at the other end connected to the rod by a flexible zinc-alloy connector. Fitted to the ring is a meshed net with a depth of 15cm and a support strength of 500 gm.

Supplied with the Dog Net W.C. are miniature, plastic, bio-degradable garbage bags which are closed by a drawstring/tape. These bags are designed to fit in the Dog Net W.C.

On taking the dog for its toilet walk one places a bag in the net. When the animal makes a move to defecate the extended rod is held so that the faeces can be collected in the bag.

The bag is then closed by means of the drawstring/tape and can be disposed of.

The advantage of this solution over the ones where the faeces is removed after the act is that no traces of faeces are left on the ground or surface involved.

### Brief Description of Figures in the Drawings

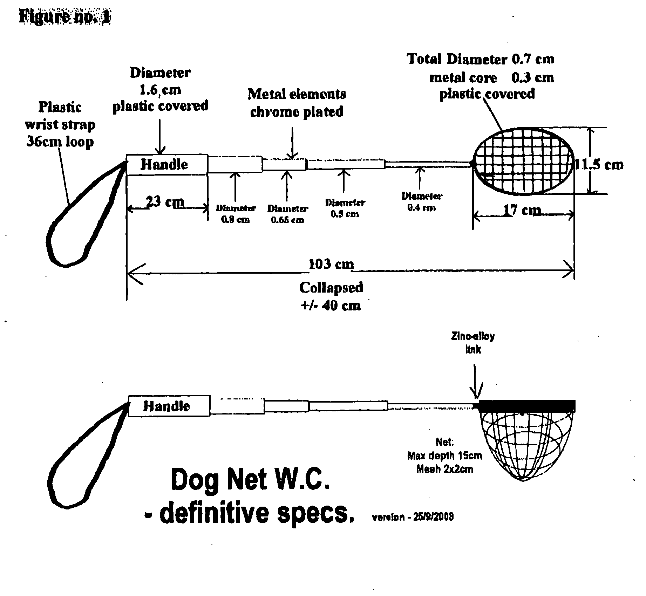

The drawing shows a top and side view giving dimensions and construction elements.

## Claims

1. Protection is sought for the Dog Net W.C. design, construction and utilisation.

2. The design allows a user of the apparatus to easily carry it.

3. It is **characterised by**; a) the possibility to extend from a small, portable size (40 cm) to an extended rod (103 cm) enabling use without undue effort from the user, e.g. having to bend; b) the fixing of the net-ring (ellipse shaped- 11,5x17 cm) to the rod is by means of a flexible connector; c) the tailor-made insert bags ensure a clean operation.

4. The Dog Net W.C. is constructed as follows; wrist-strap- nylon cord; handle - plastic; telescopic rod - 4 elements of chrome-plated steel; connector - zinc-alloy; ring-plastic covered steel; net - plastic mesh, 2x2 cm; bags - 22x20 cm, bio-degradable plastic thickness size 10.
